# EUROPÄISCHE PATENTSCHRIFT

(11) **EP 1 245 019 B1**
(45) Veröffentlichungstag und Bekanntmachung des Hinweises auf die Patenterteilung: **17.09.2003**
(21) Anmeldenummer: 00991596.8
(22) Anmeldetag: 13.12.2000
(51) Int. Cl.: G08G 1/127, H04Q 7/00

(54) **VERFAHREN ZUR ERMITTLUNG VON VERKEHRSINFORMATIONEN SOWIE ZENTRALE UND ENDGERÄT**
METHOD FOR DETERMINING TRAFFIC INFORMATION, CONTROL CENTRE AND TERMINAL
PROCEDE POUR DETERMINER DES INFORMATIONS SUR LA CIRCULATION, CENTRAL ET TERMINAL

(30) Priorität: 23.12.1999 DE 19962396
(43) Veröffentlichungstag der Anmeldung: 02.10.2002
(73) Patentinhaber: Volkswagen Aktiengesellschaft, 38436 Wolfsburg (DE)
(72) Erfinder: WASZKEWITZ, Jürgen, 21629 Neu Wuhnsdorf (DE)
(86) Internationale Anmeldenummer: EP0012664
(87) Internationale Veröffentlichungsnummer: WO01048725

(56) Entgegenhaltungen:
- EP-A- 0 892 379
- WO-A-96/29688
- WO-A-99/24952
- WO-A-99/27717
- DE-A- 19 629 233
- US-A- 5 884 221
- PATENT ABSTRACTS OF JAPAN vol. 1999, no. 12, 29. Oktober 1999 (1999-10-29) & JP 11 187456 A (AISIN SEIKI CO LTD), 9. Juli 1999 (1999-07-09)

## Beschreibung

Die Erfindung betrifft ein Verfahren zum Ermitteln von Verkehrsinformationen innerhalb eines Verkehrsnetzes in mindestens einer Zentrale, bei dem mindestens ein mobiler Detektor, insbesondere ein Fahrzeug, ein Endgerät umfaßt, das zumindest eine Positionsbestimmungseinrichtung, eine Datenverarbeitungseinrichtung und eine Einrichtung zum Datenaustausch mit der Zentrale aufweist, und zumindest Daten über seinen Standort an die Zentrale sendet. Die Erfindung betrifft weiterhin eine Zentrale zur Ermittlung von Verkehrsinformationen innerhalb eines Verkehrsnetzes, welche zumindest von einem mobilen Detektor Daten über seine geographische Position erhält sowie ein Endgerät in einem mobilen Detektor, welches in Abhängigkeit vordefinierter Kriterien zumindest Daten über seine geographische Position an eine Zentrale sendet, wobei das Endgerät zumindest eine Einrichtung zum Senden zumindest der Daten über seine geographische Position an die Zentrale aufweist.

Zur Ermittlung von Verkehrszuständen bzw. Verkehrsinformationen können neben stationären Erfassungseinrichtungen, wie sie beispielsweise aus der WO 99/21154 bekannt sind, auch mobile Detektoren, zum Einsatz kommen. So ist zum Beispiel aus der WO 96/29688 ein Verfahren und eine Einrichtung zur Ermittlung von dynamischen Verkehrsinformationen bzw. Verkehrsereignissen bekannt. Dabei werden von als mobile Sensoren arbeitenden Fahrzeugen Verkehrsflußinformationen, wie gefahrene Geschwindigkeit, aktuelle Verkehrsmengen, Brems- und Beschleunigungsverhalten ermittelt und zusammen mit einer Positionsinformation, bestehend aus geographischen Koordinaten, an eine Verkehrsdienstezentrale übermittelt, welche anhand einer digital abgelegten Straßenkarte eine Plausibilitätsprüfung der erfaßten Daten durchführt und entsprechende Verkehrsinformationen generiert. Als Übertragungsmedium werden zum Beispiel die "Bearer"-Dienste der Mobilfunkanbieter genutzt, wie beispielsweise der SMS (Short Message Service). Die bekannten Verfahren sind heute jedoch noch nicht in jeder Weise zufriedenstellend. So werden trotz Datenreduzierung häufig wenig aussagefähige oder nicht relevante Meßdaten beispielsweise von Parkplätzen oder Ampelanlagen oder langsamen Fahrten durch Tempo 30-Zonen von den mobilen Sensoren übertragen.

Zur Reduzierung dieses Problems sind verschiedene Vorgehensweisen bekannt. Anhand der letzten Fahrmanöver, insbesondere der Krümmungsradien der letzten gefahrenen Kurven, entscheidet das Endgerät des mobilen Detektors, ob es sich auf einer Autobahn oder autobahnähnlichen Straße befindet, und meldet Verkehrszustände an die Verkehrsdienstezentrale auch nur für solche Strecken. Dieses Verfahren ist jedoch nur bedingt auf das übrige Straßennetz ohne hohe Kommunikationskosten für irrelevante Meldungen zu übertragen.

Eine andere Möglichkeit besteht darin, den mobilen Detektor mit einer digitalen Straßenkarte auszustatten. Anhand der von der Positionseinrichtung ermittelten geographischen Koordinaten und der digitalen Straßenkarte kann der mobile Detektor eine Plausibilitätsprüfung seiner ermittelten Daten durchführen, indem er ermittelt, ob er sich auf einer für die Verkehrsdatenerfassung relevanten Straße befindet und welche Reisegeschwindigkeiten auf dieser Straße normal sind. Ein Nachteil eines solchen Verfahrens ist der hohe Speicherbedarf für die digitale Straßenkarte und die aufwendige Aktualisierung der Straßenkarte.

Zusätzlich ist aus der WO 99/27717 ein Verfahren zum endgeräteseitigen Empfangen und Verarbeiten von von einer Zentrale an eine Vielzahl von nicht definierten Teilnehmern ausgesendeten Informationen, insbesondere Verkehrsinformationen bekannt. Dabei wird vom Endgerät mindestens ein empfangbarer Kanal des Mobilfunknetzes ausgewählt, über den die Zentrale Rundspruchnachrichten aussendet, wobei endgerätseitig nur ein passiver Empfang erfolgt.

Die Aufgabe der Erfindung ist es deshalb, ein Verfahren und eine Vorrichtung zur Ermittlung von Verkehrsinformationen zu schaffen, mit deren Hilfe der Aufwand für die Kommunikation, der durch Meldung der mobilen Detektoren von nicht relevanten Daten an die Verkehrsdienstezentrale entsteht, reduziert werden kann.

Die Aufgabe wird durch die Merkmale der Patentansprüche 1, 11 und 19 gelöst. Vorteilhafte Aus- und Weiterbildungen sind in den Unteransprüchen dargestellt.

Gemäß der Erfindung ist vorgesehen, daß die Zentrale Daten über Straßenverläufe auf denen vom mobilen Detektor eine Ermittlung des Verkehrszustands erfolgen soll, über ein Kommunikationsverfahren, bei dem die Daten an eine Vielzahl von nicht definierten Teilnehmern übermittelt werden, an den oder die mobilen Detektoren sendet, wobei im mobilen Detektor nur ein passiver Empfang der Daten erfolgt.

Nach einer besonderen Ausgestaltung der Erfindung werden die Daten des Straßennetzes als Rundspruchnachrichten, insbesondere über ein Cell-Broadcast-Verfahren, ein Digital Audio Broadcast-(DAB) oder ein Digital Video Broadcast-Verfahren (DVB), gesendet. Der Vorteil eines solchen Verfahrens liegt dabei insbesondere darin, daß nur ein den begrenzten Empfangsbereich betreffender Datensatz des Straßennetzes, der einen bestimmten Speicherbedarf nicht überschreitet, gesendet wird. Da sich der mobile Detektor zwangsweise in diesem Gebiet befindet, sind auch nur diese Daten für ihn von Belang.

Ein Cell-Broadcast-Verfahren ist beispielsweise in der WO 99/27717 und der WO 00/54524 beschrieben.

Eine vorteilhafte Ausbildung der Erfindung sieht vor, daß das Endgerät des mobilen Detektors die empfangenen Daten zur weiteren Verarbeitung zumindest abspeichert. Die von der Zentrale ausgesendeten Daten der Straßenverläufe enthalten zumindest Verläufe definierter Straßennetzabschnitte, insbesondere die geographischen Daten der Straßennetzabschnitte, wobei insbesondere die Daten solcher Straßennetzabschnitte gesendet werden, für die eine Verkehrsinformationsermittlung in der Zentrale durchgeführt werden soll.

Vorzugsweise enthalten die Daten der Straßenverläufe auch Informationen über die Straßenart und/oder die Straßeneigenschaften, insbesondere Daten über die Reisegeschwindigkeit auf den Straßennetzabschnitten, insbesondere über die minimale und/oder maximale Reisegeschwindigkeit.

Nach einer Ausbildung werden die vom Endgerät des mobilen Detektors empfangenen Daten der Straßenverläufe einer Prüfung anhand der geographischen Position des mobilen Detektors unterzogen und nur die für die Position relevanten Daten abgespeichert.

Zusätzlich kann vorgesehen sein, daß die Daten der Straßenverläufe von der Zentrale codiert bzw. verschlüsselt gesendet werden und nur von solchen Endgeräten gelesen werden können, die den entsprechenden gültigen Code kennen.

Die empfangenen und abgespeicherten Daten der Straßenverläufe werden vom mobilen Detektor zur Plausibilitätsprüfung der vom mobilen Detektor ermittelten Straßenzustandsdaten verwendet. In Abhängigkeit des Ergebnisses dieser Plausibilitätsprüfung werden zumindest die Daten über die geographische Position des mobilen Detektors an die Zentrale gesendet.

Die erfindungsgemäße Zentrale ist derart ausgebildet, daß sie zumindest über ein Kommunikationsverfahren, bei dem Daten an eine Vielzahl von nicht definierten Teilnehmern übermittelt werden, Daten über Straßenverläufe an den mindestens einen mobilen Detektor sendet auf denen vom mobilen Detektor eine Ermittlung des Verkehrszustands erfolgen soll. Die Daten werden vorzugsweise als Rundspruchnachrichten, insbesondere über ein Cell-Broadcast-Verfahren, ein Digital Audio Broadcast (DAB) - oder ein Digital Video Broadcast-Verfahren (DVB), an eine Vielzahl von nicht definierten Teilnehmern von der Zentrale gesendet.

Gemäß einer Weiterbildung ist die Zentrale derart ausgebildet, daß die Daten der Straßenverläufe in einem definierten Ausstrahlungsgebiet gesendet werden und in unterschiedlichen Ausstrahlungsgebieten unterschiedliche Daten gesendet werden.

Eine andere Ausbildung sieht vor, daß die Zentrale derart ausgebildet ist, daß sie die Daten der Straßenverläufe codiert aussendet, wobei die Daten nur von solchen Endgeräten gelesen werden können, die den jeweils gültigen Code besitzen.

Der jeweils gültige Code wird von der Zentrale vorzugsweise über einen Mobilfunkkanal an einen oder mehrere bestimmte Detektoren gesendet.

Das erfindungsgemäße Endgerät der mobilen Detektoren weist zusätzlich eine Einrichtung zum Empfangen von Daten auf, welche von der Zentrale über ein Kommunikationsverfahren ausgesendet werden, bei dem Daten an eine Vielzahl von nicht definierten Teilnehmern übermittelt werden, wobei die Daten Daten über Straßenverläufe sind, auf denen vom mobilen Detektor eine Emittlung des Verkehrszustands erfolgen soll. Die Daten werden nach einer Ausbildung der Erfindung als Rundspruchnachrichten, insbesondere über ein Cell-Broadcast-Verfahren an eine Vielzahl von nicht definierten Teilnehmern gesendet und können innerhalb des Ausstrahlungsgebiets von allen empfangsbereiten Endgeräten empfangen werden.

Das Endgerät ist vorzugsweise derart ausgebildet, daß es zumindest eine Speicherung der empfangenen Daten der Straßenverläufe zuläßt.

Vor der Speicherung kann nach einer Ausbildung der Erfindung eine Prüfung der empfangenen Daten anhand der geographischen Position des mobilen Detektors vorgesehen sein, bei der nur die für die Position relevanten Daten vom Endgerät abgespeichert werden.

Eine Weiterbildung des erfindungsgemäßen Endgerätes sieht außerdem vor, daß im Endgerät eine Codierung für die von der Zentrale ausgesendeten Daten abgelegt ist und nur die Daten mit der selben Codierung vom Endgerät gelesen werden können.

Übersteigt die Menge der im Endgerät abgelegten Daten einen Schwellwert, der beispielsweise durch den vorhandenen Speicherplatz in der Datenverarbeitungseinrichtung festgelegt ist, werden im Endgerät die Daten gelöscht, die die größte Entfernung zur geographischen Position des mobilen Detektors aufweisen.

Das erfindungsgemäße Endgerät weist nach einer vorteilhaften Ausbildung der Erfindung eine Mobilfunkeinrichtung zumindest zur bidirektionalen Kommunikation mit der Zentrale auf. Auf diesem Kommunikationsweg kann die Zentrale die Codierung an das Endgerät des mobilen Detektors senden. Das Endgerät wiederum sendet auf diesem Weg an die Zentrale zumindest die Daten über die momentane Position des mobilen Detektors.

Nachfolgend wird die Erfindung anhand eines Ausführungsbeispiels näher beschrieben. Die zugehörigen Zeichnungen zeigen:

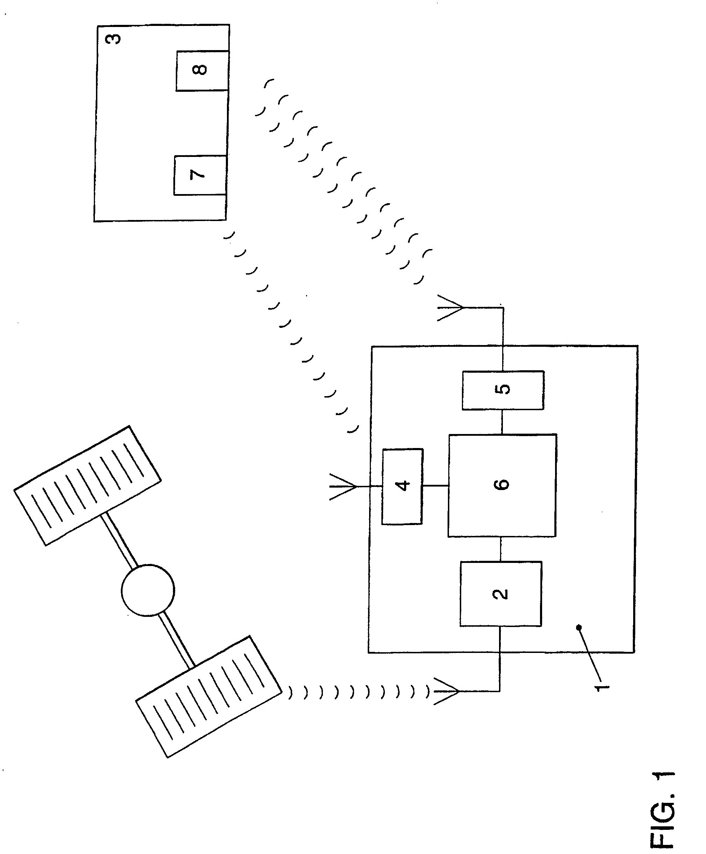

Fig. 1 ein Blockschaltbild eines Systems zur Ermittlung von Verkehrszuständen.

In Fig. 1 ist ein System zur Erfassung von Verkehrsinformationen auf einer von mindestens einem mobilen Detektor 1, insbesondere ein Kraftfahrzeug, befahrenen Route dargestellt.

Das Endgerät eines mobilen Detektors weist eine Positionsbestimmungseinrichtung zur Ermittlung der geographischen Koordinaten seines momentanen Standortes, vorzugsweise eine satellitengestützte Erfassungseinrichtung 2, eine Datenverarbeitungseinrichtung 6 und eine Einrichtung 5 zur bidirektionalen Datenkommunikation mit einer entsprechenden Kommunikationseinrichtung 8 der Zentrale 3 auf. Über diese Datenkommunikationsstrecke kommuniziert das Endgerät 1 über ein Point-to Point-Verfahren mit der Zentrale 3 und sendet im einfachsten Fall in Abhängigkeit vordefinierter Kriterien seine geographischen Koordinaten an die Zentrale 3, die aus der zeitlichen Änderung der geographischen Koordinaten Verkehrszustände und/oder Fahrzeiten ermittelt. In anderen Fällen werden von detektorseitigen Sensoren aufgenommene Bewegungsdaten von der Datenverarbeitungseinrichtung 6 des Endgerätes ausgewertet und beispielsweise in Abhängigkeit eines Vergleiches mit Erwartungswerten an die Zentrale 3 gesendet. Solche Verfahren sind beispielsweise aus der DE 195 13 640 C2, der DE 196 43 454 A1 oder der WO 98/36397 bekannt. Problematisch ist bei diesen Verfahren, daß das Endgerät 1 des mobilen Detektors nur seine eigenen geographischen Koordinaten, nicht jedoch seine Position im tatsächlichen Verkehrsnetz kennt. Dadurch besteht die Gefahr von Falschmeldungen oder einer großen Anzahl von nicht oder nur gering relevanten Meldungen an die Zentrale 3, die nicht notwendige Kosten verursachen.

Zur Vermeidung dieses Nachteils muß das Endgerät 1 Daten des Straßennetzes besitzen, um zu entscheiden, ob es sich auf einem für die Verkehrsinformationserfassung relevanten Straßennetzabschnitt befindet. Eine Möglichkeit besteht darin, die Daten des gesamten Straßennetzes in der Datenverarbeitungseinrichtung 6 des Endgerätes 1 abzulegen. Dies würde jedoch einen hohen Aufwand an Speicherbedarf bedeuten. Außerdem können Änderungen des Straßennetzes dem Endgerät nur mit erheblichem Aufwand mitgeteilt werden.

Aus diesem Grund sieht die Erfindung vor, daß dem Endgerät 1 des mobilen Detektors Daten des Straßennetzes über ein Kommunikationsverfahren, bei dem die Daten an eine Vielzahl von nicht definierten Teilnehmern übermittelt werden, mitgeteilt werden. Ein solches Verfahren ist beispielsweise das Cell-Broadcast-Verfahren. Über Cell-Broadcast werden Mitteilungen von einem Absender verschickt, und zwar an alle empfangsbereiten Endgeräte 1 innerhalb eines Ausstrahlungsgebietes, die einen bestimmten Kanal zum Empfang solcher Nachrichten aktiviert haben. Alle Empfänger innerhalb dieses Gebietes erhalten dieselben Informationen. Die Zentrale 3 weist zum Übermitteln der Daten des Straßennetzes eine entsprechende Sendeinrichtung 7 auf. Demgegenüber ist mit der Datenverarbeitungseinrichtung 4 des Endgerätes 1 eine entsprechende Empfangseinrichtung 4 verbunden.

Die von der Zentrale 3 gesendeten Daten über das Straßennetz enthalten neben den Daten der Straßenverläufe auch Informationen über die Straßenart, wie zum Beispiel, ob es sich um eine Autobahn oder eine Landstraße handelt, als auch Daten der Straßeneigenschaften, hier sind insbesondere die minimalen und maximalen Reisegeschwindigkeiten von Bedeutung, an Hand derer das Endgerät 1 entscheidet, ob es eine Meldung (erfaßten Verkehrszustand) an die Zentrale 3 abgibt oder nicht. Durch Änderung der Daten des Straßennetzes ist es der Zentrale 3 möglich, das Meldeverhalten der mobilen Detektoren bestimmten Umständen und Erfordernissen, insbesondere der Verkehrslage anzupassen. Zur Minimierung der zu übertragenden Datenmenge sollten nur die Daten der Straßenabschnitte innerhalb des Ausstrahlungsbereiches von der Zentrale 3 ausgesendet werden, auf denen eine Verkehrszustandserfassung erfolgen soll. Da die mobilen Detektoren für ihre Entscheidung, ob sie sich auf einem für die Verkehrslageerfassung relevanten Abschnitt des Straßennetzes befinden, nur die entsprechenden Daten des Straßennetzes in der Nähe der momentanen Position des mobilen Detektors benötigen, werden in einer Cell-Broadcast-Zelle nur die Daten der in dieser Zelle und in unmittelbarer Nähe dieser Zelle gelegenen Straßennetzabschnitte von der Zentrale 3 in dieser Zelle gesendet. Zusätzlich können in der Datenverarbeitungseinrichtung 6 des Endgerätes die empfangenen Daten einer Prüfung anhand der momentanen Position des mobilen Detektors unterzogen werden, wobei nur die für die momentane Position relevanten Daten in der Datenverarbeitungseinrichtung abgespeichert werden.

Weiterhin ist es zweckmäßig, die von der Zentrale 3 gesendeten Daten des Straßennetzes zu verschlüsseln. Im Ausführungsbeispiel wird dazu ein symmetrisches Verschlüsselungsverfahren eingesetzt. Die Verschlüsselung oder Kodierung kann dabei in bestimmten Abständen gewechselt werden, wobei die Endgeräte 1 der mobilen Detektoren die Kodierung über die bidirektionale Kommunikationsstrecke zwischen der Kommunikationseinrichtung 8 der Zentrale 3 und der Einrichtung 5 des Endgerätes 1 in regelmäßigen Abständen oder auf Anfrage des Endgerätes 1 mitgeteilt bekommen.

Ein von der Sendeeinrichtung 7 der Zentrale 3 gesendetes Datentelegramm des Straßennetzes weist nach dem Ausführungsbeispiel zumindest folgende Inhalte auf:
1. einen Kode oder Schlüsselnummer
2. die Anfangs- und Endkoordinaten der relevanten Straßennetzabschnitte und gegebenenfalls die Koordinaten von Stützpunkten auf den Straßennetzabschnitten,
3. eine Information, in welche Fahrtrichtung der Straßennetzabschnitt relevant ist,
4. Informationen über die Straßeneigenschaften und Straßenart der gesendeten Straßennetzabschnitte
5. Eine Information über das vereinbarte Koordinatensystem

Des weiteren kann ein Datentelegramm Informationen enthalten, die die Anzahl der im Datentelegramm gesendeten Straßennetzabschnitte, die die Anzahl der Stützpunkte auf dem jeweiligen Straßennetzabschnitt sowie gegebenenfalls, ob die Anfangs- und Endpunkte bzw. die Stützpunkte der Straßennetzabschnitte durch sogenannte Fangradien beschrieben werden, enthalten. Zusätzlich können neben weiteren denkbaren Daten auch Informationen im Datentelegramm enthalten sein, die angeben, ob der Endpunkt eines Straßennetzabschnittes der Anfangspunkt des nächsten Straßennetzabschnittes ist.

Ist eine größere Anzahl von Informationen zu senden, als in einem von der Zentrale sendbaren Datentelegramm Platz finden, so werden diese Informationen auf mehrere Datentelegramme verteilt und zyklisch gesendet. Vorzugsweise sollten einen relevanten Straßennetzabschnitt betreffende Daten auch in einem Datentelegramm zusammengefaßt sein.

Bis auf die Kodierung werden die Informationen verschlüsselt gesendet. Wird nun vom Endgerät 1 über die Empfangseinrichtung 4 ein Datentelegramm empfangen, wird von der Datenverarbeitungseinrichtung 6 ermittelt, ob die empfangene Kodierung mit einer in der Datenverarbeitungseinrichtung 6 abgelegten Kodierung übermittelt. Wird keine solche Kodierung ermittelt, wird das empfangene Datentelegramm verworfen. Wird jedoch die Kodierung gefunden, kann das restliche Datentelegramm entschlüsselt und die entsprechenden Informationen in der Datenverarbeitungseinrichtung 6 abgelegt werden.

Jeder Straßennetzabschnitt beginnt dabei mit den Koordinaten eines Stratpunktes und verläuft gegebenenfalls über Stützpunkte bis zu den Koordinaten eines Endpunktes. Für die Rückrichtung sind dann die Koordinaten des Endpunktes die Koordinaten seines Stratpunktes. Die Verkehrszustandserfassung des mobilen Detektors erfolgt durch permanente Erfassung seiner geographischen Position über die Erfassungseinrichtung 2 seines Endgerätes 1. Dabei ordnet die Datenverarbeitungseinrichtung 6 die geographische Position einem Straßennetzabschnitt zu. Im Nachfolgenden wird nun ein mögliches Verfahren für eine Verkehrszustandsermittlung auf einem Straßennetzabschnitt durch den mobilen Detektor beschrieben. Befindet sich der mobile Detektor am Stratpunkt eines Straßennetzabschnittes so startet er eine Zeitmessung. Erreicht er nun den Endpunkt des betreffenden Straßennetzabschnittes und hat er auch die dazwischen liegenden Stützpunkte in richtiger Reihenfolge passiert, wird die Zeitmessung beendet und die gemessene Reisezeit mit der minimalen und der maximalen Reisezeit dieses Straßennetzabschnittes verglichen.

Liegt im Endgerät 1 für den Straßennetzabschnitt weder eine minimale noch eine maximale Reisezeit vor, so werden die auf dem Straßennetzabschnitt gemessene Reisezeit und die Koordinaten des Straßennetzabschnittes in der Datenverarbeitungseinrichtung 6 einem Zufallsfilter oder Abrechnungsparameter vorgelegt. Liegt eine maximale Reisezeit vor und ist die gemessene Reisezeit größer oder liegt eine minimale Reisezeit vor und ist die gemessene Reisezeit kleiner, so werden die gemessene Reisezeit und die Koordinaten des Straßennetzabschnittes ebenfalls dem Zufallsfilter, der die Sendehäufigkeit wiedergibt, vorgelegt, mit dessen Hilfe entschieden wird, ob die Koordinaten des Straßennetzabschnittes und die Reisezeit an die Zentrale 3 gesendet werden. Über den Zufallsfilter in der Datenverarbeitungseinrichtung 6 wird für jedes ihm vorgelegte Paar aus Reisezeit und Koordinaten eine zufällige Zahl zwischen 0 und 1 ermittelt und diese Zahl mit einer Zufallsfilterzahl verglichen, die das Endgerät 1 von der Zentrale 3 mit den weiteren Daten des Straßennetzes erhalten hat. Die übermittelte Zufallsfilterzahl liegt zwischen 0 und 1, zum Beispiel angegeben in n/255 = 0...255. Ist die ermittelte Zahl kleiner als dieser Bruch, so wird die Stratkoordinate und die Reisezeit von der Einrichtung 5 des Endgerätes 1 der Zentrale 3 übermittelt. Nachfolgend wird hierfür ein Beispiel angegeben. Für einen bestimmten Straßennetzabschnitt ist eine Reisezeit von 300 Sekunden normal. Die Zentrale 3 sendet für diesen Straßennetzabschnitt für beide Fahrtrichtungen eine maximale Reisezeit von 450 Sekunden und keine minimale Reisezeit. Des weiteren wird eine 1 als "Zufallsfilterzahl" gesendet. Bildet sich nun ein Stau auf diesem Straßennetzabschnitt, so wird der mobile Detektor vielleicht 500 Sekunden für diesen Straßennetzabschnitt benötigen und das der Zentrale melden. Die Zentrale 3 markiert den Straßennetzabschnitt als gestaut und erhöht die maximale Reisezeit auf 600 Sekunden und setzt die minimale Reisezeit auf 400 Sekunden. Benötigt danach ein mobiler Detektor länger als 600 Sekunden auf diesem Straßennetzabschnitt, so wird er der Zentrale 3 die Zunahme des Staus melden. Nimmt der Stau ab oder löst er sich auf, so wird auch dies der Zentrale gemeldet, sobald ein mobiler Detektor den Straßennetzabschnitt mit weniger als 400 Sekunden passiert. Durch das Setzen und das Übermitteln an die Endgeräte 1 der maximalen und der minimalen Reisezeit kann die Zentrale 3 die Kommunikation auf Verkehrszustandsänderungen beschränken. Will die Zentrale 3 einen staugefährdeten Straßennetzabschnitt gezielt überwachen, so gibt sie für diesen Straßennetzabschnitt weder eine minimale noch eine maximale Reisezeit bekannt. Jeder mobile Detektor sendet dann seine Reisezeit für diesen Straßennetzabschnitt. Um die Anzahl der Kommunikationsereignisse zu reduzieren, kann die "Zufallsfilterzahl" verkleinert werden, damit nur noch eine stochastische Auswahl gesendet wird.

## Patentansprüche

1. Verfahren zum Ermitteln von Verkehrsinformationen innerhalb eines Verkehrsnetzes in mindestens einer Zentrale (3), bei dem mindestens ein mobiler Detektor, insbesondere ein Fahrzeug, ein Endgerät (1) umfaßt, das zumindest eine Positionsbestimmungseinrichtung (2), eine Datenverarbeitungseinrichtung (6) und eine Einrichtung (5) zum Datenaustausch mit der Zentrale (3) aufweist, und zumindest Daten über seinen Standort an die Zentrale (3) sendet, **dadurch gekennzeichnet, daß** von dem mindestens einen mobilen Detektor Daten über Straßenverläufe, auf denen vom mobilen Detektor eine Ermittlung des Verkehrszustandes erfolgen soll und die von der Zentrale (3) über ein Kommunikationsverfahren, bei dem die Daten an eine Vielzahl von nicht definierten Teilnehmern übermittelt werden, ausgesendet werden, empfangbar sind und/oder empfangen werden, wobei im mobilen Detektor nur ein passiver Empfang erfolgt.

2. Verfahren nach Anspruch 1, **dadurch gekennzeichnet, daß** die Daten über die Straßenverläufe von der Zentrale (3) als Rundspruchnachrichten, insbesondere über ein Cell-Broadcast-Verfahren, ein Digital Audio Broadcast-Verfahren (DAB) oder ein Digital Video Broadcast-Verfahren (DVB) an eine Vielzahl von nicht definierten Teilnehmern gesendet werden.

3. Verfahren nach Anspruch 1 oder 2, **dadurch gekennzeichnet, daß** das Endgerät (1) des mobilen Detektors zumindest eine Speicherung der empfangenen Daten der Straßenverläufe vornimmt.

4. Verfahren nach einem der Ansprüche 1 bis 3, **dadurch gekennzeichnet, daß** die Zentrale (3) das Meldeverhalten der mobilen Detektoren Umständen und Erfordernissen, insbesondere der Verkehrslage, durch Änderung der Daten der Straßenverläufe anpasst.

5. Verfahren nach Anspruch 1, **dadurch gekennzeichnet, daß** die Daten über die Straßenverläufe Informationen über die Straßenart und/oder die Straßeneigenschaften, insbesondere Daten über die Reisezeit und/oder -geschwindigkeit auf dem Straßennetzabschnitt, insbesondere Daten der minimalen und/oder maximalen Reisezeit und/oder -geschwindigkeit, beinhalten.

6. Verfahren nach Anspruch 1 oder 5, **dadurch gekennzeichnet, daß** die Daten über die Straßenverläufe nur Daten der Straßen und/oder Straßenabschnitte beinhalten, die für eine Verkehrsinformationserfassung relevant sind.

7. Verfahren nach einem der Ansprüche 1 bis 6, **dadurch gekennzeichnet, daß** von einer Cell-Broadcast-Zelle nur die Daten des befahrenen Straßennetzes, die diese Cell-Broadcast-Zelle betreffen, ausgesendet werden.

8. Verfahren nach einem der Ansprüche 1 bis 7, **dadurch gekennzeichnet, daß** die empfangenen Daten der Straßenverläufe vom Endgerät (1) einer Prüfung anhand der geographischen Position des mobilen Detektors unterzogen werden und nur die für die Position relevanten Daten abgespeichert werden.

9. Verfahren nach einem der Ansprüche 1 bis 8, **dadurch gekennzeichnet, daß** die Daten der Straßenverläufe von der Zentrale (3) codiert gesendet werden, und nur von solchen Endgeräten (1) der mobilen Detektoren gelesen werden können, die den entsprechenden gültigen Code kennen.

10. Verfahren nach einem der Ansprüche 1 bis 9, **dadurch gekennzeichnet, daß** Daten über die Straßenverläufe zur Plausibilitätsprüfung der vom mobilen Detektor ermittelten Straßenzustandsdaten im Endgerät (1) verwendet werden und bei positivem Ergebnis zumindest die Daten über den Standort des mobilen Detektors an die Zentrale (3) gesendet werden.

11. Zentrale zur Ermittlung von Verkehrsinformationen innerhalb eines Verkehrsnetzes, die zumindest von einem mobilen Detektor Daten über seine geographische Position erhält, **dadurch gekennzeichnet, daß** die Zentrale (3) derart ausgebildet ist, daß sie zumindest über ein Kommunikationsverfahren, bei dem Daten an eine Vielzahl von nicht definierten Teilnehmern übermittelt werden, Daten über Straßenverfäufe, auf denen vom mobilen Detektor eine Ermittlung des Verkehrszustandes erfolgen soll, an den mindestens einen mobilen Detektor sendet.

12. Zentrale nach Anspruch 11, **dadurch gekennzeichnet, daß** die Daten über der Straßenverläufe als Rundspruchnachrichten, insbesondere über ein Cell-Broadcast-Verfahren, ein Digital Audio Broadcast-Verfahren (DAB) oder ein Digital Video Broadcast-Verfahren (DVB) an eine Vielzahl von nicht definierten Teilnehmern gesendet werden.

13. Zentrale nach Anspruch 11 oder 12, **dadurch gekennzeichnet, daß** die von der Zentrale (3) gesendeten Daten der Straßenverläufe geographische Koordinaten der Straßenverläufe des Straßennetzes aufweisen.

14. Zentrale nach Anspruch 13, **dadurch gekennzeichnet, daß** die Zentrale (3) das Meldeverhalten der mobilen Detektoren Umständen und Erfordernissen, insbesondere der Verkehrslage, durch Änderung der Daten der Straßenverläufe anpasst.

15. Zentrale nach Anspruch 13 oder 14, **dadurch gekennzeichnet, daß** die Daten über die Straßenverläufe nur Daten der Straßen und/oder Straßenabschnitte beinhalten, die für eine Verkehrszustandserfassung relevant sind.

16. Zentrale nach einem der Ansprüche 11 bis 15, **dadurch gekennzeichnet, daß** die Zentrale (3) derart ausgebildet ist, daß die Daten über die Straßenverläufe in einem definierten Bereich gesendet werden und in unterschiedlichen Bereichen unterschiedliche Daten gesendet werden.

17. Zentrale nach einem der Ansprüche 11 bis 16, **dadurch gekennzeichnet, daß** die Zentrale (3) derart ausgebildet ist, daß sie die Daten der Straßenverläufe codiert aussendet, wobei die Daten nur von solchen Endgeräten (1) der mobilen Detektoren gelesen werden können, die den entsprechenden gültigen Code besitzen.

18. Zentrale nach Anspruch 17, **dadurch gekennzeichnet, daß** der jeweilig gültige Code von der Zentrale (3) über einen Mobilfunkkanal (5,8) an die mobilen Detektorenge sendet wird.

19. Endgerät in einem mobilen Detektor, welcher zumindest Daten über seinen Standort an eine Zentrale (3) sendet, das zumindest eine Positionsbestimmungseinrichtung (2), eine Datenverarbeitungseinrichtung (6) und mindestens eine Einrichtung (5) zum Senden zumindest der Daten über den Standort des mobilen Detektors an die Zentrale (3) aufweist, **dadurch gekennzeichnet, daß** eine Einrichtung (4) zum Empfangen von Daten, welche von der Zentrale (3) über ein Kommunikationsverfahren ausgesendet werden, bei dem die Daten an eine Vielzahl von nicht definierten Teilnehmern übermittelt werden, vorgesehen ist, wobei der mobile Detektor die Daten über seinen Standort an die Zentrale (3) in Abhängigkeit zumindest der von der Zentrale (3) gesendeten Daten über Straßenverläufe sendet, auf denen vom mobilen Detektor eine Ermittlung des Verkehrszustands erfolgen soll.

20. Endgerät nach Anspruch 19, **dadurch gekennzeichnet, daß** die Daten über die Straßenverläufe von der Zentrale (3) als Rundspruchnachrichten, insbesondere über ein Cell-Broadcast-Verfahren, ein Digital Audio Broadcast-Verfahren (DAB) oder ein Digital Video Broadcast-Verfahren (DVB) an die Vielzahl von nicht definierten Teilnehmern gesendet werden.

21. Endgerät nach Anspruch 19 oder 20, **dadurch gekennzeichnet, daß** das Endgerät (1) in Abhängigkeit der von der Einrichtung (4) zum Empfangen von Daten empfangenen Daten entscheidet, ob es eine Meldung an die Zentrale (3) abgibt.

22. Endgerät nach einem der Ansprüche 19 bis 21, **dadurch gekennzeichnet, daß** das Endgerät (1) derart ausgebildet ist, daß es eine Speicherung der empfangenen Daten der Straßenverläufe vornimmt.

23. Endgerät nach einem der Ansprüche 19 bis 22, **dadurch gekennzeichnet, daß** das Endgerät (1) derart ausgebildet ist, daß es eine Prüfung der empfangenen Daten der Straßenverläufe anhand der geographischen Position des mobilen Detektors durchführt und nur die für die Position relevanten Daten abgespeichert werden.

24. Endgerät nach einem der Ansprüche 19 bis 23, **dadurch gekennzeichnet, daß** im Endgerät (1) eine Codierung für die von der Zentrale (3) ausgesendeten Daten abgelegt ist und nur die Daten mit dieser Codierung vom Endgerät (1) gelesen werden können.

25. Endgerät nach einem der Ansprüche 19 bis 24, **dadurch gekennzeichnet, daß** über einer definierten Größe der im Endgerät (1) abgespeicherten Daten die Daten der Straßenabschnitte, die die größte Entfernung zur Position des mobilen Detektors aufweisen, gelöscht werden.

26. Endgerät nach einem der Ansprüche 19 bis 25, **dadurch gekennzeichnet, daß** das Endgerät (1) eine Mobilfunkeinrichtung (5) zumindest zur bidirektionalen Kommunikation mit der Zentrale (3) aufweist, welche eine von der Zentrale (3) ausgesendete Codierung für das Lesen der Daten der Straßenverläufe empfangen kann und/oder empfängt und welche zumindest Daten über die momentane Position des mobilen Detektors senden kann und/oder sendet.

## Claims

1. Method for determining traffic information within a transportation network in at least one control centre (3), in which at least one mobile detector, in particular a vehicle, comprises a terminal (1) which has at least one position determining device (2), one data processing device (6) and one device (5) for exchanging data with the control centre (3), and transmits at least data relating to its location to the control centre (3), **characterized in that** data relating to road profiles, on which the traffic state is to be determined by the mobile detector, and which data is transmitted by the control centre (3) using a communications method in which the data is transferred to a multiplicity of undefined subscribers, can be received and/or is received from the at least one mobile detector, only passive reception taking place in the mobile detector.

2. Method according to Claim 1, **characterized in that** the data relating to the road profiles is transmitted to a multiplicity of undefined subscribers by the control centre (3) as broadcast messages, in particular using a cell broadcast method, a digital audio broadcast method (DAB) or a digital video broadcast method (DVB).

3. Method according to Claim 1 or 2, **characterized in that** the terminal (1) of the mobile detector at least stores the received data relating to the road profiles.

4. Method according to one of Claims 1 to 3, **characterized in that** the control centre (3) adapts the signalling behaviour of the mobile detectors to circumstances and requirements, in particular to the traffic situation, by changing the data relating to the road profiles.

5. Method according to Claim 1, **characterized in that** the data relating to the road profiles contains information on the type of road and/or the road properties, in particular data relating to the travel time and/or travel speed on the section of the road network, in particular data relating to the minimum travel time and/or maximum travel time and/or minimum speed and/or maximum speed.

6. Method according to Claim 1 or 5, **characterized in that** the data relating to the road profiles contains only data relating to the roads and/or road sections which are relevant for sensing traffic information.

7. Method according to one of Claims 1 to 6, **characterized in that** only the data of the road network which is travelled on and which relates to this cell broadcast cell is emitted by a cell broadcast cell.

8. Method according to one of Claims 1 to 7, **characterized in that** the received data of the road profiles is subjected by the terminal (1) to checking by reference to the geographic position of the mobile detector, and only the data which is relevant to this position is stored.

9. Method according to one of Claims 1 to 8, **characterized in that** the data relating to the road profiles is transmitted coded by the control centre (3), and can be read only by terminals (1) of the mobile detectors which recognize the corresponding valid code.

10. Method according to one of Claims 1 to 9, **characterized in that** the data relating to the road profiles is used for plausibility checking of the road state data in the terminal (1), which data is determined by the mobile detector, and at least the data relating to the location of the mobile detector is transmitted to the control centre (3) when there is a positive result.

11. Control centre for determining traffic information within a road network which receives, from at least one mobile detector, data relating to the geographic position of said mobile detector, **characterized in that** the control centre (3) is embodied in such a way that, using at least one communications method in which data is transmitted to a multiplicity of undefined subscribers, said control centre (3) transmits data relating to road profiles on which the traffic state is to be determined by the mobile detector to the at least one mobile detector.

12. Control centre according to Claim 11, **characterized in that** the data relating to the road profiles is transmitted as broadcast messages, to a multiplicity of undefined subscribers, in particular using a cell broadcast method, a digital audio broadcast method (DAB) or a digital video broadcast method (DVB).

13. Control centre according to Claim 11 or 12, **characterized in that** the data relating to the road profiles which is transmitted by the control centre (3) has geographic coordinates of the road profiles of the road network.

14. Control centre according to Claim 13, **characterized in that** the control centre (3) adapts the signalling behaviour of the mobile detectors to circumstances and requirements, in particular to the traffic situation, by changing the data relating to the road profiles.

15. Control centre according to Claim 13 or 14, **characterized in that** the data relating to the road profiles contains only data relating to the roads and/or road sections which are relevant for sensing the state of the traffic.

16. Control centre according to one of Claims 11 to 15, **characterized in that** the control centre (3) is embodied in such a way that the data relating to the road profiles is transmitted in a defined area, and different data is transmitted in different areas.

17. Control centre according to one of Claims 11 to 16, **characterized in that** the control centre (3) is embodied in such a way that it emits data relating to the road profiles in encoded form, the data being able to be read only by terminals (1) of the mobile detectors which have the corresponding valid code.

18. Control centre according to Claim 17, **characterized in that** the respectively valid code is transmitted by the control centre (3) to the mobile detectors on a mobile radio channel (5, 8).

19. Terminal in a mobile detector which transmits at least data relating to its location to a control centre (3) and which has at least one position-determining device (2), one data-processing device (6) and at least one device (5) for transmitting at least the data relating to the location of the mobile detector to the control centre (3), **characterized in that** a device (4) for receiving data which is emitted by the control centre (3) using a communications method in which the data is transmitted to a multiplicity of undefined subscribers is provided, the mobile detector transmitting data relating to its location to the control centre (3) as a function of at least the data relating to the road profiles on which the state of the traffic is to be determined by the mobile detector, said data being transmitted by the control centre (3).

20. Terminal according to Claim 19, **characterized in that** the data relating to the road profiles is transmitted by the control centre (3) as broadcast messages to a multiplicity of undefined subscribers, in particular using a cell broadcast method, a digital audio broadcast method (DAB) or a digital video broadcast method (DVB).

21. Terminal according to Claim 19 or 20, **characterized in that** the terminal (1) decides, as a function of the data received by the device (4) for receiving data, whether it outputs a message to the control centre (3).

22. Terminal according to one of Claims 19 to 21, **characterized in that** the terminal (1) is embodied in such a way that it stores the received data relating to the road profiles.

23. Terminal according to one of Claims 19 to 22, **characterized in that** the terminal (1) is embodied in such a way that it carries out checking of the received data relating to the road profiles by reference to the geographic position of the mobile detector, and only the data which is relevant to this position is stored.

24. Terminal according to one of Claims 19 to 23, **characterized in that** a code for the data which is emitted by the control centre (3) is stored in the terminal (1), and the terminal (1) can only read data with this code.

25. Terminal according to one of Claims 19 to 24, **characterized in that**, above a defined amount of data stored in the terminal (1), the data relating to the road sections which are the greatest distance from the position of the mobile detector is deleted.

26. Terminal according to one of Claims 19 to 25, **characterized in that** the terminal (1) has a mobile radio device (5), at least for bidirectional communication with the control centre (3), which mobile radio device can receive and/or receives a code, emitted by the control centre (3), for reading the data relating to the road profiles, and which can transmit and/or transmits at least data relating to the instantaneous position of the mobile detector.

## Revendications

1. Procédé de détection d'informations sur la circulation routière à l'intérieur d'un réseau de circulation routière, dans au moins un central (3), procédé dans lequel au moins un détecteur mobile, en particulier un véhicule, comprend un terminal (1) présentant au moins un dispositif intégrateur de position (2), un dispositif de traitement de données (6) et un dispositif (5) pour l'échange de données avec le central (3), et envoie au moins des données sur sa localisation au central (3), **caractérisé en ce que** le détecteur mobile, au moins un, peut recevoir et/ou reçoit des données sur des tracés des routes sur lesquelles le détecteur mobile doit opérer une détection de l'état de la circulation et qui sont émises par le central (3) via un procédé de communication dans lequel les données sont transmises à une multitude d'usagers non définis, seule une réception passive ayant lieu dans le détecteur mobile.

2. Procédé selon la revendication 1, **caractérisé en ce que** les données sur les tracés des routes sont envoyées par le central (3) sous forme de communiqués radiotéléphoniques, en particulier via un procédé de diffusion cellulaire, un procédé de diffusion audio-numérique (DAB) ou un procédé de diffusion vidéo-numérique (DVB) à une multitude d'usagers non définis.

3. Procédé selon la revendication 1 ou 2, **caractérisé en ce que** le terminal (1) du détecteur mobile procède à au moins une mise en mémoire des données sur les tracés des routes reçues.

4. Procédé selon l'une des revendications 1 à 3, **caractérisé en ce que** le central (3) adapte le comportement d'annonce des détecteurs mobiles à des circonstances et à des exigences, en particulier de la situation du trafic, par modification des données sur les tracés des routes.

5. Procédé selon la revendication 1, **caractérisé en ce que** les données sur les tracés des routes comportent des informations sur le type des routes et/ou les caractéristiques des routes, en particulier des données sur le temps et/ou la vitesse de parcours sur le tronçon de réseau routier, en particulier des données sur le temps et/ou la vitesse minimum et/ou maximum de parcours.

6. Procédé selon la revendication 1 ou 5, **caractérisé en ce que** les données sur les tracés des routes ne comportent que des données sur les routes et/ou des tronçons des routes qui sont importantes pour une détection des informations sur la circulation routière.

7. Procédé selon l'une des revendications 1 à 6, **caractérisé en ce qu'**une cellule de diffusion cellulaire n'envoie que les données relatives au réseau routier emprunté, qui concernent cette cellule de diffusion cellulaire.

8. Procédé selon l'une des revendications 1 à 7, **caractérisé en ce que** le terminal (1) soumet les données sur les tracés des routes reçues à une vérification en s'aidant de la position géographique du détecteur mobile et que seules les données importantes pour la position sont mises en mémoire.

9. Procédé selon l'une des revendications 1 à 8, **caractérisé en ce que** les données sur les tracés des routes sont envoyées par le central (3) sous forme codée et ne peuvent être lues que par les terminaux (1) des détecteurs mobiles qui connaissent le code valide correspondant.

10. Procédé selon l'une des revendications 1 à 9, **caractérisé en ce que** les données sur les tracés des routes sont utilisées dans le terminal (1) pour l'analyse de plausibilité des données sur l'état des routes détectées par le détecteur mobile et, en cas de résultat positif, au moins les données sur la localisation du détecteur mobile sont envoyées au central (3).

11. Central pour détection d'informations sur la circulation routière à l'intérieur d'un réseau de circulation routière, obtenant d'au moins un détecteur mobile des données sur sa position géographique, **caractérisé en ce que** le central (3) est configuré pour envoyer au détecteur mobile, au moins un, via un procédé de communication, au moins, dans lequel des données sont transmises à une multitude d'usagers non définis, des données sur les tracés des routes sur lesquelles le détecteur mobile doit opérer une détection de l'état de la circulation.

12. Central selon la revendication 11, **caractérisé en ce que** les données sur les tracés des routes sont envoyées sous forme de communiqués radiotéléphoniques, en particulier via un procédé de diffusion cellulaire, un procédé de diffusion audio-numérique (DAB) ou un procédé de diffusion vidéo-numérique (DVB) à une multitude d'usagers non définis.

13. Central selon la revendication 11 ou 12, **caractérisé en ce que** les données envoyées par le central (3) sur les tracés des routes présentent des coordonnées des tracés des routes du réseau routier.

14. Central selon la revendication 13, **caractérisé en ce que** le central (3) adapte le comportement d'annonce des détecteurs mobiles à des circonstances et à des exigences, en particulier de la situation du trafic, par modification des données sur les tracés des routes.

15. Central selon la revendication 13 ou 14, **caractérisé en ce que** les données sur les tracés des routes ne comportent que des données sur les routes et/ou des tronçons de routes qui sont importantes pour une détection de l'état de la circulation.

16. Central selon l'une des revendications 11 à 15, **caractérisé en ce que** le central (3) est configuré pour que les données sur les tracés des routes sont émises dans une zone définie et **en ce que** dans des zones différentes, des données différentes sont émises.

17. Central selon l'une des revendications 11 à 16, **caractérisé en ce que** le central (3) est configuré pour émettre les données sur les tracés des routes sous forme codée, les données ne pouvant être lues que par les terminaux (1) des détecteurs mobiles qui possèdent le code valide correspondant.

18. Central selon la revendication 17, **caractérisé en ce que** le code valide est envoyé aux détecteurs mobiles par le central (3), via un canal de radiotéléphonie mobile (5, 8).

19. Terminal dans un détecteur mobile envoyant à un central (3) au moins des données sur sa localisation, terminal qui présente au moins un dispositif intégrateur de position (2), un dispositif de traitement de données (6) et au moins un dispositif (5) pour envoyer au moins les données sur la localisation du détecteur mobile au central (3), **caractérisé en ce qu'**il est prévu un dispositif (4) destiné à recevoir des données qui sont envoyées par le central (3) via un procédé de communication dans lequel les données sont transmises à une multitude d'usagers non définis, le détecteur mobile envoyant les données sur sa localisation au central (3) en fonction au moins des données envoyées par le central (3) sur les tracés des routes sur lesquelles le détecteur mobile doit opérer une détection de l'état de la circulation.

20. Terminal selon la revendication 19, **caractérisé en ce que** les données sur les tracés des routes sont envoyées par le central (3) sous forme de communiqués radiotéléphoniques, en particulier via un procédé de diffusion cellulaire, un procédé de diffusion audio-numérique (DAB) ou un procédé de diffusion vidéo-numérique (DVB) à la multitude d'usagers non définis.

21. Terminal selon la revendication 19 ou 20, **caractérisé en ce que** le terminal (1) décide s'il émet un avis au central (3), en fonction des données reçues par le dispositif (4) destiné à recevoir des données.

22. Terminal selon l'une des revendications 19 à 21, **caractérisé en ce que** le terminal (1) est configuré pour procéder à une mise en mémoire des données sur les tracés des routes reçues.

23. Terminal selon l'une des revendications 19 à 22, **caractérisé en ce que** le terminal (1) est configuré pour exécuter une vérification des données sur les tracés des routes reçues en s'aidant de la position géographique du détecteur mobile, et pour que seules les données importantes pour la position soient mises en mémoire.

24. Terminal selon l'une des revendications 19 à 23, **caractérisé en ce qu'**un codage pour les données émises par le central (3) est consigné dans le terminal (1) et que seules les données dotées de ce codage peuvent être lues par le terminal (1).

25. Terminal selon l'une des revendications 19 à 24, **caractérisé en ce que** via une grandeur définie des données mises en mémoire dans le terminal (1), les données relatives aux tronçons de routes présentant le plus grand éloignement de la position du détecteur mobile, sont effacées.

26. Terminal selon l'une des revendications 19 à 25, **caractérisé en ce que** le terminal (1) présente un dispositif de radiotéléphonie mobile (5) au moins pour communication bidirectionnelle avec le central (3), qui peut recevoir et/ou reçoit un codage émis par le central (3) pour la lecture des données, et qui peut envoyer et/ou envoie au moins des données sur la position momentanée du détecteur mobile.
